# FASCICULE DE BREVET EUROPEEN

(11) **EP 0 921 721 B1**
(45) Date de publication et mention de la délivrance du brevet: **05.09.2001**
(21) Numéro de dépôt: 98936449.2
(22) Date de dépôt: 29.06.1998
(51) Int. Cl.: A01K 59/00, A01K 47/06

(54) **DISPOSITIFS ET PROCEDES PERMETTANT D'OBTENIR UN MIEL VIERGE, ASSORTI DE FILTRAGE DIRECT**
VORRICHTUNGEN UND VERFAHREN ZUR GEWINNUNG VOM FRISCHHONIG, UND DAZU GEHÖRENDE DIREKTE FILTRIERUNG
METHODS AND DEVICES FOR OBTAINING GREEN HONEY COMBINED WITH DIRECT FILTERING

(30) Priorité: 30.06.1997 FR 9708460
(43) Date de publication de la demande: 16.06.1999
(73) Titulaire: Bencsik, Joseph, 69005 Lyon (FR)
(72) Inventeur: Bencsik, Joseph, 69005 Lyon (FR)
(74) Mandataire: Kihn, Pierre Emile Joseph
(86) Numéro de dépôt international: FR9801377
(87) Numéro de publication internationale: WO9901028

(56) Documents cités:
- DE-A- 2 702 132
- FR-A- 2 653 298

## Description

La présente invention concerne des dispositifs et procédés permettant de faire déposer le butin nectar par les abeilles, aussitôt cueilli et cela dans les alvéoles construites par elles directement dans des récipients propres à la consommation tels que pots en verre transparent par exemple et assortis d'un dit dispositif de filtrage direct, dont l'usage permet au consommateur lui-même de séparer le miel de la cire et cela récipient par récipient au moment de la dégustation.

On peut produire comme décrit dans le document FR 2653 298 du miel en rayon élaboré dans des récipients par les abeilles à partir du miel précédemment récolté, donc non vierge, mais un tel dispositif présente bien d'autres handicaps également importants: les récipients étant posés verticalement et sur leur bouche et sur un support horizontal, en conséquence les abeilles par nature n'arrêtent pas la construction des alvéoles au ras de la bouche des récipients, mais bien au-delà, elles collent même le tout sur la ruche productrice. Résultat: au moment du prélèvement des récipients, nombreuses alvéoles sont inévitablement blessées, arrachées, d'où écoulements externes et internes gênants, abeilles engluées, difficultés de fermeture, de plus ces dispositifs ne sont assortis d'aucun système de filtrage direct, alors que les systèmes de filtrage connus utilisant la mécanique industrielle ne conviennent pas pour filtrer du miel déposé directement dans les récipients de la consommation et cela au moment de la dégustation par le consommateur lui même, et récipient par récipient.

Les dispositifs et procédés selon l'invention étant de conception radicalement différente évitent de nombreux handicaps que présentent des dispositifs connus.

En effet, à l'opposé des dispositifs connus, les dispositifs selon l'invention n'ont pas pour but la transformation d'un produit apicole déjà manipulé en un autre, mais il permet d'obtenir une nourriture pour l'homme, vierge de toutes manipulations humaines et de plus, d'assortir le produit obtenu d'un dispositif de filtrage direct, utilisable par le consommateur lui-même au moment de la dégustation et cela récipient par récipient. Contrairement aux dispositifs connus, les récipients à faire garnir d'alvéoles remplies de miel directement par les abeilles ne sont pas posés sur des ouvertures d'un support horizontal par leur bouche, donc dans une position verticale, mais au contraire, ils sont fixés amovibles horizontalement dans les évidements d'une paroi verticale avec leur bouche au ras de la face externe et de plus, avec en face un cadre classique de ruche suspendu, écarté à la distance réservée à la circulation des abeilles. En conséquence les constructions d'alvéoles gamies de miel sont naturellement et proprement arrêtées par les abeilles elles-mêmes et cela justement au ras de la bouche des récipients, donc pas d'alvéoles brisées au moment des prélèvements ni écoulements de miel internes et externes ni abeilles engluées et pas de problèmes de fermeture de récipients.

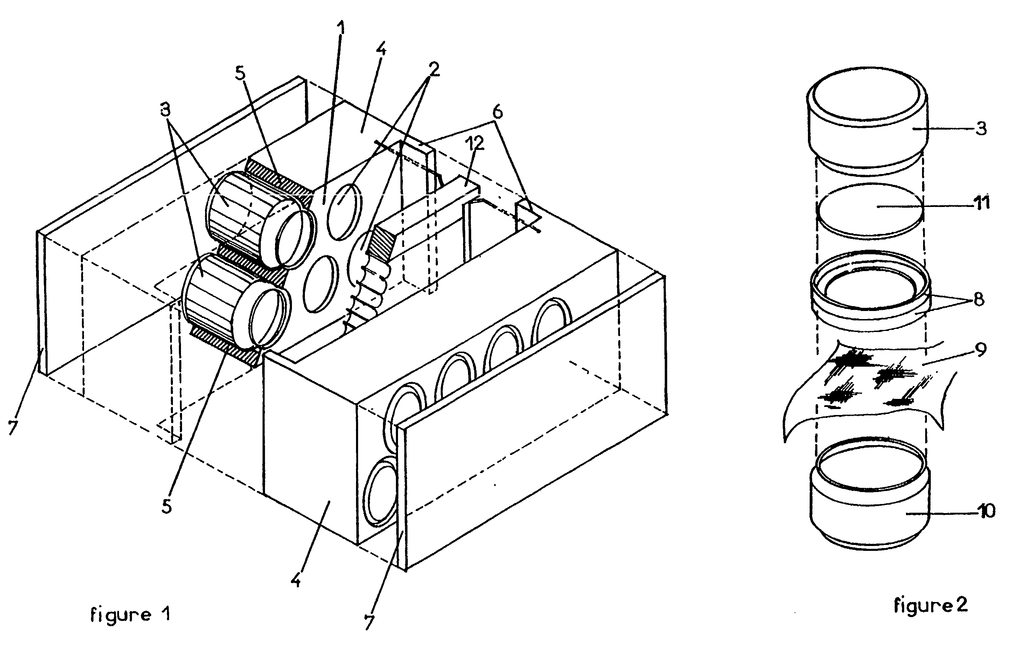

Le dessin figure 1 joint est une coupe-vue axonométrique éclatée du DISPOSITIF DE GARNISSAGE. Une paroi-avant verticale (1) disposant des évidements (2) en batterie dans lesquels sont fixés au ras de la face externe et horizontalement de façon amovible par leur bouche des récipients (3) adéquats propres à la consommation tels que pots en verre transparent par exemple, destinés à être gami par les abeilles d'alvéoles remplies de nectar par exemple en provenance directe des fleurs, puis élaboré en miel, le tout étant recouvert d'une enveloppe-pourtour (4) résistante aux manipulations apicoles, elle même fermée face à la dite paroi-avant verticale (1) par une paroi-arrière verticale amovible (7), tandis que les bords de la dite enveloppe-pourtour (4) en contact avec la dite paroi-avant verticale (1) sont prolongés dans le plan vertical seulement pour former des rives (6) de façon à créer un espace juste suffisant pour permettre le passage aux abeilles au devant de la dite paroi-avant verticale (1), les abeilles étant exclues de l'espace résiduel (5) situé hors des dits récipients (3) placés, les dits dispositifs de garnissage étant symétriquement juxtaposables et superposables.

Les dits dispositifs de garnissage sont réalisables avantageusement par exemple dans une matière de type mousse rigide adéquate, remplissant aussi les dits espaces résiduels (5). Ainsi les mêmes dispositifs peuvent être également utilisés comme protection pour acheminer le produit obtenu chez les distributeurs, voir chez les consommateurs.

LE PROCEDE DE GARNISSAGE selon l'invention consiste à poser les dits dispositifs de garnissage sur la ruche productrice à la place de la hausse, ou à la place de la "chambre à miel" séparées par une grille à reine classique et cela pendant les périodes de miellées en général au minimum par groupe de deux, avec la dite paroi-avant verticale (1) respective se faisant face, tandis qu'entre deux dispositifs de garnissage il est avantageux de suspendre un cadre de ruche classique (12) en grande partie garnie de miel operculé et écarté à la distance juste pour laisser le passage des abeilles, l'ensemble étant recouvert par le couvre-cadre classique et le toit de la ruche.

Pour contrôler l'état d'avancement du garnissage, il suffit d'enlever la dite paroi-arrière verticale (7) amovible, alors les dits récipients (3) étant an général en verre transparent permettent à l'apiculteur de vérifier à vue l'état d'avancement du garnissage et même de changer les dits récipients garnis par des récipients vides sans pour autant provoquer un dérangement perturbateur pour la colonie productrice. Les récipients garnis (3) peuvent être alors déposés à l'abri des abeilles pillardes et placés avec leur ouverture orientée vers le haut pour laisser échapper les quelques abeilles se trouvant éventuellement encore à l'intérieur. On peut aussi procéder au prélèvement de l'ensemble des récipients garnis par l'utilisation de la méthode classique de récolte par chasse d'abeilles par exemple.

Le dessin figure 2 joint, vue axonométrique éclatée montre les différents éléments du DISPOSITIF DE FILTRAGE ASSORTI permettant au consommateur de procéder lui même à la séparation du miel des alvéoles obtenu par le dit dispositif de garnissage et cela juste avant la dégustation, récipient par récipient et sans pour autant modifier la composition biologique, chimique du produit.

Une capsule double face (8) fixée amovible sur le recipient garni (3) d'alvéoles contenant du miel et sur un récipient vide (10) avec entre eux une rondelle d'étanchéité (11) et un filtre (9) comme par exemple un morceau de tulle de taille et de maille adéquates assurant le passage rapide d'une substance visqueuse comme le miel, et permettant de retenir des débris d'alvéoles, mais n'affectant pas la composition biologique, chimique, du produit filtré.

LE PROCEDE DE FILTRAGE ASSORTI selon l'invention consiste à l'aide d'une fourchette par exemple, à briser les alvéoles operculées dans le récipient garni (3), sur lequel fixer ensuite la dite capsule double face (8) avec son dit filtre (9) et un dit récipient vide (10), puis incliner l'ensemble, le dit récipient garni (3) étant en position haute et laisser écouler le miel dans le dit récipient vide (10). Pour l'égouttement on redresse l'ensemble à la verticale, puis on enlève le dit dispositif de filtrage direct y compris les débris d'alvéoles, ainsi le miel contenant tous ses composants d'origine est disponible à la consommation comme un miel produit à la manière classique. Dans le cas où le miel serait figé dans les alvéoles, placer le dit récipient (3) garni au bain marie à une température de 35 à 40 °C jusqu'à ce que le miel retrouve sa viscosité d'origine, avant de procéder à l'opération de filtrage proprement dit.

## Revendications

1. Procédé pour obtenir un filtrage assorti permettant de séparer commodément des débris d'alvéoles du miel vierge en rayon, et cela récipient par récipient par le consommateur lui-même, selon ses besoins et cela au moment de la dégustation, **caractérisé en ce qu**'il consiste à utiliser une capsule double face (8) avec un filtre (9) et une rondelle d'étanchéité placés entre un récipient garni de miel en rayon (3), un récipient vide (10), à enlever la rondelle d'étanchéité (11), à briser les alvéoles dans le récipient garni (3), à poser sur celui-ci (3) la capsule double face (8), à poser sur cette capsule double (8) le filtre (9), et le récipient vide (10) à incliner ensuite l'ensemble, le récipient garni (3) étant en position haute et à laisser écouler le miel dans le récipient vide (10).

2. Dispositif de filtrage assorti du miel vierge en rayon pour la mise en oeuvre du procédé selon la revendication 1, **caractérisé en ce qu**'il comporte une capsule double face (8) conçue pour permettre de fixer sur elle de façon amovible et simultanée, le récipient garni (3), la rondelle d'étanchéité (11), le filtre (9) et le récipient vide (10, Fig. 2).

3. Dispositif de filtrage selon la revendication 2 pour la mise en oeuvre du procédé selon la revendication 1, **caractérisé en ce qu**'il comporte une rondelle d'étanchéité (11) placée dans la capsule double (8) et cela à partir de l'installation de celui-ci et face au pot garni (3) permettant la fermeture hermétique de celui-ci jusqu'au moment de l'opération de filtrage.

4. Dispositif de filtrage selon l'une des revendications 2 ou 3 pour la mise en oeuvre du procédé selon la revendication 1, **caractérisé en ce qu**'il comporte un filtre (9) tel qu'un morceau de tulle ou un morceau de gaze chirurgicale stérile permettant le passage d'une substance visqueuse comme le miel retenant les débris d'alvéoles, mais n'affectant pas la composition biologique, chimique, du produit filtré.

5. Dispositif de filtrage selon l'une des revendications 2 à 4 pour la mise en oeuvre du procédé selon la revendication 1, **caractérisé en ce que** les rayons de miel vierge à filtrer sont construits par les abeilles directement dans les récipients garnis (3) après avoir séjourné pour cet effet en batterie dans ou sur une ruche.

6. Dispositif de filtrage selon l'une des revendications 2 à 5 pour la mise en oeuvre du procédé selon la revendication 1, **caractérisé en ce que** les récipients garnis (3) sont des pots en matière transparente.

7. Dispositif de filtrage selon l'une des revendications 2 à 6 pour la mise en oeuvre du procédé selon la revendication 1, **caractérisé en ce que** les récipients garnis (3) de miel en rayon à filtrer sont placés sur ou dans une ruche de production pour leur garnissage par les abeilles elles mêmes, dans une paroi avant verticale (1) et dans des évidements (2) en batterie fixés au ras de la face externe et horizontalement de façon amovible et par leur bouche.

8. Dispositif de filtrage selon l'une des revendications 2 à 7 pour la mise en oeuvre du procédé selon la revendication 1, **caractérisé en ce que** la paroi verticale (1) dans laquelle les récipients garnis (3) de miel en rayon à filtrer sont placés pour leur garnissage est réalisée dans une matière de type mousse rigide.

9. Dispositif de filtrage selon l'une des revendication 2 à 8 pour la mise en oeuvre du procédé selon la revendication 1, **caractérisé en ce que** l'épaisseur de la paroi verticale (1) contentant les récipients garnis (3) de miel en rayon à filtrer est telle qu'elle remplit aussi les espaces résiduels (5).

10. Dispositif de filtrage selon l'une des revendications 2 à 9 pour la mise en oeuvre du procédé selon la revendication 1, **caractérisé en ce que** la paroi avant (1) contenant les récipients garnis (3) de miel en rayon à filtrer est utilisée comme protection pour acheminer le produit obtenu chez les distributeurs, voire chez les consommateurs.

## Claims

1. Filtration method enabling the consumer to separate honeycomb debris from green comb honey, one receptacle at a time, according to his requirements and at the time of consumption, characterised by the fact that it consists of using a double-sided adapter piece (8) with a filter (9) and a sealing disc, placed between a receptacle filled with comb honey (3) and an empty receptacle (10), of removing the sealing disc (11), breaking the honeycombs in the filled receptacle (3), placing the double-sided adapter piece (8) upon the latter (3), placing the filter (9) and the empty receptacle (10) upon the double-sided adapter piece (8), and then tilting the complete assembly so that the receptacle filled with comb honey (3) is at the top, then allowing the honey to flow into the empty receptacle (10).

2. Filtration device for green comb honey for carrying out the method according to claim 1, characterised by the fact that it comprises a double-sided adapter piece (8) designed so that the receptacle filled with comb honey (3), the sealing disc (11) and filter (9) and the empty receptacle (10. Fig. 2) can be simultaneously fitted to it in a detachable manner.

3. Filtration device according to claim 2 for carrying out the method according to claim 1, characterised by the fact that it comprises a sealing disk (11) placed in the double-sided adapter piece (8) after the installation of the latter and facing the receptacle filled with comb honey (3), allowing the latter to remain hermetically sealed until the moment of filtering.

4. Filtration device according to one of claims 2 or 3 for carrying out the method according to claim 1, characterised by the fact that it comprises a filter (9), such as a piece of tulle or sterilised surgical gauze, that allows the passage of a viscous substance such as honey while retaining the honeycomb debris, without affecting the biological or chemical composition of the filtered product.

5. Filtration device according to one of claims 2 to 4 for carrying out the method according to claim 1, characterised by the fact that the green comb honey to be filtered is made by bees directly in the receptacles (3), placed for this purpose in a battery in or on a hive.

6. Filtration device according to one of claims 2 to 5 for carrying out the method according to claim 1, characterised by the fact that the comb honey receptacles (3) are jars made of a transparent material.

7. Filtration device according to one of claims 2 to 6 for carrying out the method according to claim 1, characterised by the fact that the comb honey receptacles (3) are placed on or in a production hive, mounted horizontally and detachably in a vertical front wall (1), with their open ends aligned flush with batteries of openings (2) in the outer face of the wall, to be filled by the bees themselves.

8. Filtration device according to one of claims 2 to 7 for carrying out the method according to claim 1, characterised by the fact that the vertical wall (1) in which the receptacles (3) for comb honey to be filtered, are mounted for filling, is made of a type of rigid foam material.

9. Filtration device according to one of claims 2 to 8 for carrying out the method according to claim 1, characterised by the fact that the thickness of the vertical wall (1) containing the receptacles (3) for comb honey to be filtered, is such that it also occupies the residual spaces (5).

10. Filtration device according to one of claims 2 to 9 for carrying out the method according to claim 1, characterised by the fact that the front wall (1) containing the receptacles (3) for comb honey to be filtered is used as protection for shipping the product obtained to distributors, possibly even to consumers.

## Patentansprüche

1. Verfahren zur Erzielung einer kombinierten Filtrierung, mit der Wabenreste von frischem Wabenhonig mühelos getrennt werden können, und zwar behälterweise durch den Verbraucher selbst, je nach seinen Bedürfnissen und zum Zeitpunkt des Verzehrs, **dadurch gekennzeichnet**, dass es darin besteht, eine doppelseitige Kapsel (8) mit einem Filter (9) und einer Dichtungsscheibe zu verwenden, die zwischen einem mit Wabenhonig garnierten Behälter (3) und einem leeren Behälter (10) angeordnet sind, die Dichtungsscheibe (11) zu entfernen, die Waben im garnierten Behälter (3) zu brechen, auf diesen Behälter (3) die doppelseitige Kapsel (8) zu setzen, auf diese Doppelkapsel (8) das Filter (9) und den leeren Behälter (10) zu setzen, das Ganze dann zu neigen, wobei der garnierte Behälter (3) oben liegt, und den Honig in den leeren Behälter (10) laufen zu lassen.

2. Vorrichtung zur kombinierten Filtrierung des Wabenhonigs zur Durchführung des Verfahrens nach Anspruch 1, **dadurch gekennzeichnet**, dass sie eine doppelseitige Kapsel (8) aufweist, die so ausgelegt ist, dass man darauf abnehmbar und gleichzeitig den garnierten Behälter (3), die Dichtungsscheibe (11), das Filter (9) und den leeren Behälter (10, Fig. 2) befestigen kann.

3. Filtriervorrichtung nach Anspruch 2 zur Durchführung des Verfahrens nach Anspruch 1, **dadurch gekennzeichnet**, dass sie eine Dichtungsscheibe (11) aufweist, die in der Doppelkapsel (8) angeordnet ist, und zwar ab der Montage der Vorrichtung und dem garnierten Topf (3) gegenüberliegend, so dass dieser bis zum Zeitpunkt des Filtriervorgangs dicht verschlossen ist.

4. Filtriervorrichtung nach einem der Ansprüche 2 oder 3 zur Durchführung des Verfahrens nach Anspruch 1, **dadurch gekennzeichnet**, dass sie ein Filter (9) aufweist, z.B. ein Stück Tüll oder ein Stück steriles Verbandmull, das den Durchlauf einer viskosen Substanz wie Honig ermöglicht, die Wabenreste zurückhält, jedoch die biologische, chemische Zusammensetzung des Filtrats nicht beeinträchtigt.

5. Filtriervorrichtung nach einem der Ansprüche 2 bis 4 zur Durchführung des Verfahrens nach Anspruch 1, **dadurch gekennzeichnet**, dass die Waben für den zu filtrierenden Frischhonig von den Bienen direkt in den Behältern (3) gebaut werden, nachdem diese in einer Batterie in oder auf einem Bienenstock verweilt haben.

6. Filtriervorrichtung nach einem der Ansprüche 2 bis 5 zur Durchführung des Verfahrens nach Anspruch 1, **dadurch gekennzeichnet**, dass die garnierten Behälter (3) Töpfe aus transparentem Material sind.

7. Filtriervorrichtung nach einem der Ansprüche 2 bis 6 zur Durchführung des Verfahrens nach Anspruch 1, **dadurch gekennzeichnet**, dass die mit zu filtrierendem Wabenhonig garnierten Behälter (3) zu ihrer Garnierung durch die Bienen selbst auf oder in einem Produktionsstock auf einer vertikalen Vorderwand (1) und in einer Reihe von Ausnehmungen (2) angeordnet sind und mit ihrer Mündung dicht an der Außenseite und horizontal abnehmbar befestigt sind.

8. Filtriervorrichtung nach einem der Ansprüche 2 bis 7 zur Durchführung des Verfahrens nach Anspruch 1, **dadurch gekennzeichnet**, dass die vertikale Wand (1), in der die mit zu filtrierendem Wabenhonig garnierten Behälter (3) zu ihrer Garnierung angeordnet sind, aus einem hartschaumartigen Material gefertigt ist.

9. Filtriervorrichtung nach einem der Ansprüche 2 bis 8 zur Durchführung des Verfahrens nach Anspruch 1, **dadurch gekennzeichnet**, dass die Dicke der vertikalen Wand (1), welche die mit zu filtrierendem Wabenhonig garnierten Behälter (3) enthält, so bemessen ist, dass sie auch die übrigen Räume (5) ausfüllt.

10. Filtriervorrichtung nach einem der Ansprüche 2 bis 9 zur Durchführung des Verfahrens nach Anspruch 1, **dadurch gekennzeichnet**, dass die Vorderwand (1), welche die mit zu filtrierendem Wabenhonig garnierten Behälter (3) enthält, als Schutz verwendet wird, um das erzeugte Produkt zu den Vertriebsfirmen und sogar zu den Verbrauchern zu befördern.
